(19) Europäisches Patentamt
European Patent Office
Office européen des brevets

(11) **EP 2 810 998 B1**

(12) **EUROPEAN PATENT SPECIFICATION**

(45) Date of publication and mention
of the grant of the patent:
**23.01.2019 Bulletin 2019/04**

(21) Application number: **12867143.5**

(22) Date of filing: **05.12.2012**

(51) Int Cl.:
***C09J 133/04*** (2006.01) ***C09J 7/38*** (2018.01)

(86) International application number:
**PCT/JP2012/081559**

(87) International publication number:
**WO 2013/114724 (08.08.2013 Gazette 2013/32)**

(54) **SURFACE PROTECTION FILM**

OBERFLÄCHENSCHUTZFILM

FILM DE PROTECTION DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2012 JP 2012021082**

(43) Date of publication of application:
**10.12.2014 Bulletin 2014/50**

(73) Proprietor: **Nitto Denko Corporation**
**Ibaraki-shi, Osaka 567-8680 (JP)**

(72) Inventors:
• **MATSUMOTO,Chie**
**Ibaraki-shi**
**Osaka 567-8680 (JP)**
• **OKADA,Mika**
**Ibaraki-shi**
**Osaka 567-8680 (JP)**

• **NISHIMURA,Izumi**
**Ibaraki-shi**
**Osaka 567-8680 (JP)**

(74) Representative: **Potter Clarkson**
**The Belgrave Centre**
**Talbot Street**
**Nottingham NG1 5GG (GB)**

(56) References cited:
**EP-A1- 2 100 933      EP-A1- 2 730 630**
**JP-A- H 115 959        JP-A- 2001 011 396**
**JP-A- 2001 200 235    JP-A- 2006 124 640**
**JP-A- 2007 191 520    JP-A- 2007 326 899**

• **DATABASE WPI Week 201241 Thomson Scientific, London, GB; AN 2012-G43660 XP002740505, & WO 2012/070494 A1 (NITTO DENKO CORP) 31 May 2012 (2012-05-31)**

**Description**

TECHNICAL FIELD

The invention relates to a surface protection film. More specifically, the invention relates to a surface protection film having a pressure-sensitive adhesive layer that is made from an aqueous dispersion-type pressure-sensitive adhesive and has both a sufficient level of adherability to adherends and a high level of removability at practical peeling rates.

BACKGROUND ART

A surface protection film including a backing film and a pressure-sensitive adhesive layer provided thereon is bonded to an adherend with the pressure-sensitive adhesive layer and used to protect the adherend from scratching or staining during processing or transportation. Such a surface protection film is required to sufficiently adhere to the adherend during processing or the like of the adherend and not to cause blistering or peeling. On the other hand, such a surface protection film is required to be easily peeled off with no pressure-sensitive adhesive layer residue on the adherend when it is peeled off from the adherend after use.

Patent Document 1 discloses a surface protection film having a pressure-sensitive adhesive layer made from a pressure-sensitive adhesive that is produced by adding an isocyanate crosslinking agent to an acryl-based polymer.

Patent Document 2 discloses an adhesive composition comprising a first acrylic polymer having a weight-average molecular weight of at least 300,000 and a second polymer comprising an alkyl methacrylate as a monomer unit and having a weight-average molecular weight of 1,000-100,000.

PRIOR ART DOCUMENT

PATENT DOCUMENT

Patent Document 1:
Patent Document 2: JP2007326899

SUMMARY OF THE INVENTION

PROBLEMS TO BE SOLVED BY THE INVENTION

In the process of peeling off the surface protection film from the adherend, however, as the peeling rate increases, the load tends to become higher, so that the removability tends to become lower.

To reduce this tendency, the crosslink density of the pressure-sensitive adhesive layer of the surface protection film may be increased so that it can be easily peeled off at a practical peeling rate (for example, about 30 m/minute). In this case, however, the pressure-sensitive adhesive layer can have insufficient wettability to the adherend and thus have lower adherability, so that the surface protection film can easily cause blistering or peeling during the transportation of the adherend or other processes.

On the other hand, the crosslink density of the pressure-sensitive adhesive layer may be reduced so that the surface protection film can have improved adherability and be sufficiently bonded to the adherend during the transportation or the like. In this case, however, the removability at practical peeling rates becomes poor as a result of the improvement of the adherability, which makes it tough to peel off the surface protection film.

In other words, conventional surface protection films can hardly have both a sufficient level of adherability and a high level of removability at practical peeling rates.

It is an object of the invention to solve the problems described above and to provide a surface protection film having a pressure-sensitive adhesive layer that is made from an aqueous dispersion-type pressure-sensitive adhesive and has both a sufficient level of adherability to adherends and a high level of removability at practical peeling rates.

MEANS FOR SOLVING THE PROBLEMS

The inventors have accomplished the invention based on findings that the problems can be solved with the surface protection film described below.

The invention is directed to a surface protection film including a backing film and a pressure-sensitive adhesive layer provided on one side of the backing film and made from an aqueous dispersion-type pressure-sensitive adhesive, wherein the aqueous dispersion-type pressure-sensitive adhesive includes an acryl-based polymer (A) including a monomer unit or units derived from a monomer composition (a2) containing an alkyl (meth) acrylate (a1) as a main component; and another acryl-based polymer (B) having a glass transition temperature higher than that of the acryl-based polymer (A) and including a monomer unit or units derived from a monomer composition (b2) containing 75% by weight or more of an alkyl (meth)acrylate (b1) capable of forming a homopolymer with a glass transition temperature of 20°C or more, the aqueous dispersion-type pressure-sensitive adhesive contains the acryl-based polymers (A) and (B) in a weight ratio (A)/(B) of 95/5 to 40/60, and the pressure-sensitive adhesive layer has a glass transition temperature peak detected at -20°C or less and a glass transition temperature peak detected at 30°C to 190°C as measured by differential scanning calorimetry (DSC), wherein

the pressure-sensitive adhesive layer has an ethyl acetate-insoluble component content of 80% by weight or more, wherein the sol of the acryl-based polymer (A) has a weight average molecular weight of 40,000 to 750,000, wherein he sol of the acryl-based polymer (B) has a weight average molecular weight of 200,000 to 4,800,000, and wherein the weight average molecular weight is determined by Gel Permeation Chromatography (GPC) with tetrahydrofuran (THF or dimethyl formamide (DMF) solvent.

The invention is directed to the surface protection film, wherein the acryl-based polymers (A) and (B) may each have a solubility parameter of 18 to 24 $(MPa)^{1/2}$.

The invention is directed to the surface protection film wherein the acryl-based polymer (A) and/or the acryl-based polymer (B) may be a polymer produced by polymerization in the presence of a reactive emulsifier.

The invention is directed to the surface protection film, wherein the aqueous dispersion-type pressure-sensitive adhesive may contain a crosslinking agent.

EFFECT OF THE INVENTION

In the surface protection film of the invention, the pressure-sensitive adhesive layer made from the aqueous dispersion-type pressure-sensitive adhesive has a sufficient level of adherability because the acryl-based polymer (A) having a relatively low glass transition temperature can ensure a sufficient level of wettability. At the same time, the whole of the pressure-sensitive adhesive layer has a high elastic modulus because the acryl-based polymer (B) having a relatively high glass transition temperature forms a high elastic modulus part of the pressure-sensitive adhesive layer. Thus, the pressure-sensitive adhesive layer can have a high level of removability even at practical peeling rates, which can significantly influence the physical properties of the whole of the pressure-sensitive adhesive layer. Therefore, the surface protection film of the invention has a sufficient level of adherability to adherends and also has a high level of removability at practical peeling rates, because its pressure-sensitive adhesive layer has a sufficiently level of wettability and also has a high elastic modulus as a whole

MODE FOR CARRYING OUT THE INVENTION

Hereinafter, the surface protection film according to an embodiment of the invention will be described.

The surface protection film according to the embodiment includes a backing film and a pressure-sensitive adhesive layer provided on one side of the backing film and made from an aqueous dispersion-type pressure-sensitive adhesive. The aqueous dispersion-type pressure-sensitive adhesive contains an acryl-based polymer (A) including a monomer unit or units derived from a monomer composition (a2) containing an alkyl (meth)acrylate (a1) as a main component; and another acryl-based polymer (B) having a glass transition temperature higher than that of the acryl-based polymer (A) and including a monomer unit or units derived from a monomer composition (b2) containing 75% by weight or more of an alkyl (meth) acrylate (b1) capable of forming a homopolymer with a glass transition temperature of 20°C or more. As used herein, the term "(meth)acryl" means "acryl and/or methacryl," and the term "main component" means a component that makes up the largest part of the weight.

In the embodiment, the pressure-sensitive adhesive layer has a glass transition temperature peak at -20°C or less and a glass transition temperature peak at 30°C to 190°C as measured by differential scanning calorimetry (DSC). When each glass transition temperature peak is observed within each range, the resulting pressure-sensitive adhesive layer can have a sufficient level of adherability to adherends and also have a high level of removability at practical peeling rates.

In the embodiment, the pressure-sensitive adhesive layer more preferably has glass transition temperature peaks at -70°C to -20°C and at 30°C to 190°C, even more preferably at -65°C to -30°C and at 50°C to 185°C, most preferably at -60°C to -40°C and at 80°C to 180°C, as measured by DSC. When each glass transition temperature peak is observed within each range, the resulting pressure-sensitive adhesive layer can have a sufficient level of adherability to adherends and also have a high level of removability at practical peeling rates . A person skilled in the art can control the peak of the glass transition temperature of the pressure-sensitive adhesive layer according to the embodiment by controlling the composition of each of the acryl-based polymers (A) and (B) within the range described below. As used herein, the glass transition temperature refers to the value measured by the method described below in the section titled "EXAMPLES."

The pressure-sensitive adhesive layer with a gel fraction of less than 70% by weight gel fraction (ethyl acetate-insoluble component content) may have too high adherability. The upper limit of the gel fraction is typically, but not limited to, 99% by weight. The pressure-sensitive adhesive layer with a gel fraction within the above range can have a sufficient level of adherability to adherends and a high level of removability at practical peeling rates. A person skilled in the art can control the gel fraction of the pressure-sensitive adhesive layer according to the embodiment by controlling the composition of each of the acryl-based polymers (A) and (B) within the range described below. As used herein, the gel fraction refers to the value measured by the method described below in the section titled "EXAMPLES."

The acryl-based polymer (A) can be obtained by emulsion polymerization of the monomer composition (a2) containing the alkyl (meth)acrylate (a1) as a main component.

The alkyl (meth)acrylate (a1) may be a (meth)acrylic ester having an alkyl group of 1 to 18 carbon atoms.

Examples of the alkyl (meth) acrylate (a1) include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These alkyl (meth)acrylates may be appropriately selected, depending on the desired adherability or other properties, and may be used singly or in combination of two or more.

The alkyl group of the alkyl (meth)acrylate more preferably has 2 to 18 carbon atoms, even more preferably 4 to 12 carbon atoms.

In the embodiment, the alkyl (meth)acrylate (a1) is preferably an alkyl (meth)acrylate capable of forming a homopolymer with a glass transition temperature (Tg) of -70°C to 20°C, more preferably -65°C to 0°C. Examples of such an alkyl (meth)acrylate include butyl acrylate (Tg: -54°C), sec-butyl acrylate (Tg: -22°C), 2-ethylhexyl acrylate (Tg: -70°C), 2-ethylhexyl methacrylate (Tg: -10°C), octyl acrylate (Tg: -65°C), octyl methacrylate (Tg: -20°C), nonyl acrylate (Tg: -58°C), dodecyl acrylate (Tg: -3°C), and dodecyl methacrylate (Tg: -65°C) .

In the acryl-based polymer (A) described above, the content of the alkyl (meth)acrylate (a1) is preferably 60% by weight or more, more preferably from 60 to 99.9% by weight, even more preferably from 70 to 99% by weight, based on 100% by weight of the total of the monomer composition (a2) used to form the acryl-based polymer (A). If the content is less than 60% by weight, the adherability may decrease. When two or more alkyl (meth)acrylates are used, the total content of all the alkyl (meth)acrylates should fall within the above range.

Besides the alkyl (meth)acrylate (a1), the monomer composition (a2) may also contain a reactive functional group-containing monomer which has a reactive functional group in the molecule.

Examples of the reactive functional group include carboxyl, hydroxyl, epoxy, amino, amide, maleimide, itaconimide, succinimide, sulfonate, phosphate, isocyanate, alkoxy, and alkoxysilyl groups. The monomer may have one or more such reactive functional groups. Among these reactive functional groups, carboxyl, hydroxyl, amino, and epoxy groups are preferred.

Examples of the reactive functional group-containing monomer include unsaturated carboxylic acids such as (meth)acrylic acid, itaconic acid, maleic acid, fumaric acid, croton, and cinnamic acid; unsaturated dicarboxylic acid monoesters such as monomethyl itaconate, monobutyl itaconate, and 2-acryloyloxyethyl phthalate; unsaturated tricarboxylic acid monoesters such as 2-methacryloyloxyethyl trimellitate and 2-methacryloyloxyethyl pyromellitate; carboxyalkyl acrylates such as carboxyethyl acrylate (e.g., β-carboxyethyl acrylate) and carboxypentyl acrylate; acrylic acid dimer (Aronix M-5600 (trade name) manufactured by Toagosei Co., Ltd.), acrylic acid trimer; unsaturated dicarboxylic anhydrides such as itaconic anhydride, maleic anhydride, and fumaric anhydride, and other carboxyl group-containing unsaturated monomers; hydroxyl group-containing unsaturated monomers such as 2-hydroxyethyl acrylate, 2-hydroxypropyl acrylate, and 2-hydroxybutyl acrylate; epoxy group-containing unsaturated monomers such as glycidyl (meth)acrylate and methylglycidyl (meth)acrylate; amino group-containing unsaturated monomers such as aminoethyl (meth)acrylate, N,N-dimethylaminoethyl (meth)acrylate, and tert-butylaminoethyl (meth)acrylate; amide group-containing unsaturated monomers such as (meth)acrylamide, N,N-dimethyl(meth)acrylamide, N,N-diethyl(meth)acrylamide, N-isopropyl(meth)acrylamide, N-butyl(meth)acrylamide, N-methoxymethyl(meth)acrylamide, N-methylol(meth)acrylamide, and N-methylolpropane(meth)acrylamide; cyano group-containing unsaturated monomers such as (meth)acrylonitrile; maleimide group-containing monomers such as N-cyclohexylmaleimide, N-isopropylmaleimide, N-laurylmaleimide, and N-phenylmaleimide; itaconimide group-containing monomers such as N-methylitaconimide, N-ethylitaconimide, N-butylitaconimide, N-octylitaconimide, N-2-ethylhexylitaconimide, N-cyclohexylitaconimide, and N-laurylitaconimide; succinimide group-containing monomers such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl group-containing heterocyclic compounds such as N-vinylpyrrolidone, N-(1-methylvinyl)pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, and (meth)acryloylmorpholine; sulfonic acid group-containing unsaturated monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphate group-containing unsaturated monomers such as 2-hydroxyethylacryloyl phosphate; and functional monomers such as 2-methacryloyloxyethyl isocyanate.

These reactive functional group-containing monomers may be appropriately selected, depending on the desired adherability or other properties, and may be used singly or in combination of two or more.

In the acryl-based polymer (A) described above, the content of the reactive functional group-containing monomer is 40% by weight or less, preferably from 0.5 to 30% by weight, more preferably from 1 to 20% by weight, based on 100% by weight of the total of the monomer composition (a2) used to form the acryl-based polymer (A). When the monomer composition (a2) contains the reactive functional group-containing monomer in an amount in the above range, the resulting pressure-sensitive adhesive layer can have good adherability and a high level of heat resistance, solvent resistance, or other properties.

Besides the alkyl (meth)acrylate (a1) and the reactive functional group-containing monomer, the monomer composition (a2) may also contain an additional copolymerizable monomer for improving the adherability to adherends or other purposes.

Examples of the copolymerizable monomer include vinyl ester group-containing monomers such as vinyl acetate; aromatic unsaturated monomers such as styrene and vinyltoluene; alicyclic hydrocarbon (meth)acrylic ester monomers such as cyclopentyl (meth)acrylate and isobornyl (meth)acrylate; alkoxy group-containing unsaturated monomers such as methoxyethyl (meth)acrylate and ethoxyethyl (meth)acrylate; olefin monomers such as ethylene, propylene, isoprene, butadiene, and isobutylene; vinyl ether monomers such as vinyl ether; and halogen atom-containing unsaturated monomers such as vinyl chloride.

The copolymerizable monomer may also be a polyfunctional monomer. Examples of such a polyfunctional monomer include (mono or poly)alkylene glycol di(meth)acrylates including (mono or poly)ethylene glycol di(meth)acrylates such as ethylene glycol di(meth)acrylate, diethylene glycol di(meth)acrylate, triethylene glycol di(meth)acrylate, and tetraethylene glycol di(meth)acrylate, and (mono or poly)propylene glycol di(meth)acrylates such as propylene glycol di(meth)acrylate; and trimethylolpropane tri(meth)acrylate, neopentyl glycol di(meth)acrylate, 1,6-hexanediol di(meth)acrylate, pentaerythritol di(meth)acrylate, tetramethylolmethane tri(meth)acrylate, pentaerythritol tri(meth)acrylate, dipentaerythritol hexa(meth)acrylate, and divinylbenzene. The polyfunctional monomer may also be polyester (meth)acrylate, epoxy (meth)acrylate, or urethane (meth)acrylate.

The copolymerizable monomer may also be an alkoxysilyl group-containing vinyl monomer. The alkoxysilyl group-containing vinyl monomer may be a silicone (meth) acrylate monomer or a vinyl silicone monomer.

Examples of the silicone (meth)acrylate monomer include (meth)acryloyloxyalkyl-trialkoxysilanes such as (meth)acryloyloxymethyl-trimethoxysilane, (meth)acryloyloxymethyl-triethoxysilane, 2-(meth)acryloyloxyethyl-trimethoxysilane, 2-(meth)acryloyloxyethyl-triethoxysilane, 3-(meth)acryloyloxypropyl-trimethoxysilane, 3-(meth)acryloyloxypropyl-triethoxysilane, 3-(meth)acryloyloxypropyl-tripropoxysilane, 3-(meth)acryloyloxypropyl-triisopropoxysilane, and 3-(meth)acryloyloxypropyl-tributoxysilane; (meth)acryloyloxyalkyl-alkyldialkoxysilanes such as (meth)acryloyloxymethyl-methyldimethoxysilane, (meth)acryloyloxymethyl-methyldiethoxysilane, 2-(meth)acryloyloxyethyl-methyldimethoxysilane, 2-(meth)acryloyloxyethyl-methyldiethoxysilane, 3-(meth)acryloyloxypropyl-methyldimethoxysilane, 3-(meth)acryloyloxypropyl-methyldiethoxysilane, 3-(meth)acryloyloxypropyl-methyldipropoxysilane, 3-(meth)acryloyloxypropyl-methyldiisopropoxysilane, 3-(meth)acryloyloxypropyl-methyldibutoxysilane, 3-(meth)acryloyloxypropyl-ethyldimethoxysilane, 3-(meth)acryloyloxypropyl-ethyldiethoxysilane, 3-(meth)acryloyloxypropyl-ethyldipropoxysilane, 3-(meth)acryloyloxypropyl-ethyldiisopropoxysilane, 3-(meth)acryloyloxypropyl-ethyldibutoxysilane, 3-(meth)acryloyloxypropyl-propyldimethoxysilane, and 3-(meth)acryloyloxypropyl-propyldiethoxysilane; and (meth)acryloyloxyalkyl-dialkyl(mono)alkoxysilanes corresponding to these silanes.

Examples of the vinyl silicone monomer include vinyltrialkoxysilanes such as vinyltrimethoxysilane, vinyltriethoxysilane, vinyltripropoxysilane, vinyltriisopropoxysilane, and vinyltributoxysilane, vinylalkyldialkoxysilanes or vinyldialkylalkoxysilanes corresponding to these silanes, vinylalkyltrialkoxysilanes such as vinylmethyltrimethoxysilane, vinylmethyltriethoxysilane, β-vinylethyltrimethoxysilane, β-vinylethyltriethoxysilane, γ-vinylpropyltrimethoxysilane, γ-vinylpropyltriethoxysilane, γ-vinylpropyltripropoxysilane, γ-vinylpropyltriisopropoxysilane, and γ-vinylpropyltributoxysilane, and (vinylalkyl)alkyldialkoxysilanes or (vinylalkyl)dialkyl(mono)alkoxysilanes corresponding to these silanes.

When the alkoxysilyl group-containing vinyl monomer is used as the copolymerizable monomer, the alkoxysilyl group can be introduced into the polymer chain, and a crosslinked structure can be formed by reaction between the alkoxysilyl groups.

These copolymerizable monomers may be used singly or in combination of two or more. The content of the copolymerizable monomer is preferably 40% by weight or less, more preferably 30% by weight or less, based on 100% by weight of the total of the monomer composition (a2) used to form the acryl-based polymer (A). If the content exceeds 40% by weight, the adherability may decrease, and the surface protection film may cause blistering or peeling.

As mentioned above, the (meth) acryl-based polymer (A) can be obtained by emulsion polymerization of the monomer composition (a2). In the emulsion polymerization, the monomer composition (a2) may be appropriately mixed in water with a polymerization initiator, an emulsifier, and an optional agent such as a chain transfer agent, and then subjected to polymerization. The acryl-based polymer (A) may be a random copolymer, a block copolymer, a graft copolymer, or any other form.

A known emulsion polymerization method may be employed, such as a batch mixing method (batch polymerization method), a monomer dropping method, or a monomer emulsion dropping method. In a monomer dropping method, continuous dropping or divided dropping is appropriately selected. Reaction conditions and other conditions are appropriately selected, in which, for example, the polymerization temperature is from 20 to 100°C.

The emulsifier to be used may be any of emulsifiers commonly used for emulsion polymerization. Examples of the emulsifier include anionic emulsifiers such as sodium lauryl sulfate, ammonium lauryl sulfate, sodium dodecylbenzenesulfonate, sodium polyoxyethylene lauryl sulfate, sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate; and nonionic emulsifiers such as polyoxyethylene alkyl ether, polyoxyethylene alkyl phenyl ether, polyoxyethylene fatty acid ester, and polyoxyethylene-polyoxypropylene block polymers. A radically-polymerizable (reactive) emulsifier prepared by introducing a radically-polymerizable functional group (reactive group) such as a propenyl group or an allyl ether group into the anionic surfactants or the nonionic surfactants may also be used. One or more of these emulsifiers may be selected and used.

The content of the emulsifier is typically from 0.2 to 10 parts by weight, preferably from 0.5 to 5 parts by weight, based on 100 parts by weight of the total of the monomer composition (a2) used to form the acryl-based polymer (A). If the emulsifier content exceeds 10 parts by weight, the pressure-sensitive adhesive may have lowered cohesive strength, so that the pressure-sensitive adhesive layer may remain in an increased amount on an adherend or the emulsifier may cause staining. If the emulsifier content is less than 0.2 parts by weight, stable emulsification may fail to be maintained.

When the radically-polymerizable (reactive) emulsifier (hereinafter referred to as a reactive emulsifier) is used as the emulsifier, it can be incorporated into the acryl-based polymer (A), so that emulsifier-induced staining can be reduced, which is advantageous.

Examples of the radically-polymerizable functional group that can be introduced to form the reactive emulsifier include a vinyl group, a propenyl group, an isopropenyl group, a vinyl ether group (vinyloxy group), and an allyl ether group (allyloxy group).

Examples of the reactive emulsifier include AQUALON HS-10, HS-20, HS-1025, KH-10, BC-05, BC-10, BC-20, and BC-2020 (all manufactured by Dai-ichi Kogyo Seiyaku Co., Ltd.), ADEKA REASOAP SE-10N (manufactured by ADEKA CORPORATION), and LATEMUL PD-104 (manufactured by Kao Corporation).

One or more of these reactive emulsifiers may be selected and used.

The polymerization initiator may be any of polymerization initiators commonly used.

Examples of the polymerization initiator for emulsion polymerization include azo initiators such as 2,2'-azobisisobutylonitrile, 2,2'-azobis(2-methylpropionamidine) disulfate, 2,2'-azobis(2-methylpropionamidine) dihydrochloride, 2,2'-azobis(2-amidinopropane) dihydrochloride, 2,2'-azobis[N-(2-carboxyethyl)-2-methylpropyonamidine] hydrate, 2,2'-azobis(N,N'-dimethyleneisobutylamidine), and 2,2'-azobis[2-(2-imidazolin-2-yl)propane] dihydrochloride; persulfate initiators such as potassium persulfate and ammonium persulfate; peroxide initiators such as benzoyl peroxide, tert-butyl hydroperoxide, and hydrogen peroxide; substituted ethane initiators such as phenyl-substituted ethane; carbonyl initiators such as aromatic carbonyl compounds; and redox initiators such as a combination of a persulfate and sodium hydrogen sulfite and a combination of a peroxide and sodium ascorbate.

These polymerization initiators may be used singly or in combination of two or more. The content of the polymerization initiator, which may be selected as needed, is typically from 0.005 to 1 part by weight, preferably from 0.01 to 0.8 parts by weight, based on 100 parts by weight of the total of the monomer composition (a2) used to form the (meth)acryl-based polymer (A).

The chain transfer agent may be used as needed to control the weight average molecular weight of the (meth)acryl-based polymer (A).

The chain transfer agent may be any of chain transfer agents commonly used, such as 1-dodecanethiol, tert-dodecanethiol, mercaptoacetic acid, 2-mercaptoethanol, 2-ethylhexyl thioglycolate, and 2,3-dimercapto-1-propanol, and other mercaptan compounds. These chain transfer agents may be used singly or in combination of two or more. The content of the chain transfer agent is typically from 0.001 to 0.5 parts by weight based on 100 parts by weight of the total of the monomer composition (a2) used to form the (meth)acryl-based polymer (A).

Ammonia water or the like may be used to adjust the pH of the emulsion to typically 7 to 9, preferably 7 to 8, so that the stability of the (meth)acryl-based polymer (A) in the emulsion can be improved.

The sol (ethyl acetate-soluble component) of the acryl-based polymer (A) has a weight average molecular weight (Mw) of 40,000 to 750,000, more preferably 50,000 to 700,000. If the weight average molecular weight (Mw) of the sol of the acryl-based polymer (A) is less than 30,000, sol-induced staining may occur as a problem, and if it exceeds 800,000, wettability may decrease, so that sufficient adhesive power may fail to be obtained. As used herein, the weight average molecular weight (Mw) refers to the value measured by the method described below in the section titled "EXAMPLES."

In the embodiment, at least one of the weight average molecular weight determined by gel permeation chromatography (GPC) using tetrahydrofuran (THF) as a solvent and the weight average molecular weight determined by GPC using dimethylformamide (DMF) as a solvent preferably falls within the above range.

The (meth) acryl-based polymer (A) may have a gel fraction (ethyl acetate-insoluble component content) of 60% by weight or more, preferably 65% by weight or more, more preferably 70% by weight or more. If the gel fraction is less than 60% by weight, the adherability may be too high. The upper limit of the gel fraction is typically, but not limited to, 99% by weight.

It is important to adjust the formulation in such a way that a pressure-sensitive adhesive layer produced only with the acryl-based polymer (A) can have a glass transition temperature peak at a temperature of -20°C or less, preferably in the range of -70°C to -20°C, more preferably in the range of -65°C to -30°C, even more preferably in the range of -60°C to -40°C, as measured by DSC. If the glass transition temperature peak is observed at higher than -20°C, the pressure-sensitive adhesive layer can have lower wettability to adherends and thus can fail to have sufficient adhesive power.

It is important that the acryl-based polymer (B) has a glass transition temperature higher than that of the acryl-based polymer (A) as measured by DSC. It is particularly important that the polymerizable monomer is selected in such a way that the acryl-based polymer (B) can have a glass transition temperature peak at a temperature in the range of 30°C to 190°C, preferably in the range of 50°C to 185°C, more preferably in the range of 80°C to 180°C. If the acryl-based polymer (B) has a glass transition temperature peak at a temperature out of the above range, there will be a significant tendency for the removability at practical peeling rates to decrease.

The acryl-based polymer (B) can be obtained by emulsion polymerization of the monomer composition (a2) containing 75% by weight or more of the alkyl (meth)acrylate (b1).

The alkyl (meth)acrylate (b1) to be used is an alkyl (meth)acrylate capable of forming a homopolymer with a glass transition temperature (Tg) of 20°C or more. Examples of such an alkyl (meth)acrylate include cyclohexyl methacrylate (Tg: 83°C), dicyclopentanyl acrylate (Tg: 120°C), dicyclopentanyl methacrylate (Tg: 175°C), isobornyl acrylate (Tg: 94°C), isobornyl methacrylate (Tg: 110°C), tert-butyl acrylate (Tg: 43°C), tert-butyl methacrylate (Tg: 118°C), isobutyl methacrylate (Tg: 53°C), ethyl methacrylate (Tg: 65°C), and methyl methacrylate (Tg: 105°C). These alkyl (meth)acrylates may be appropriately selected, depending on the desired adherability or other properties, and may be used singly or in combination of two or more.

The glass transition temperatures of homopolymers of alkyl (meth) acrylates, not shown in the description, can be read from Polymer Handbook, 4th Edition, John Wiley & Sons, Inc., 1999. The glass transition temperatures of homopolymers of monomers not shown in the handbook can also be calculated, for example, using the method described in JP-A-2007-51271.

In the acryl-based polymer (B) described above, the content of the alkyl (meth)acrylate (b1) is preferably 75% by weight or more, more preferably from 75 to 99. 9% by weight, even more preferably from 75 to 98% by weight, based on 100% by weight of the total of the monomer composition (b2) used to form the acryl-based polymer (B). If the content is less than 60% by weight, the adhesive power can be so strong at practical peeling rates that the surface protection film may be difficult to peel off. When two or more alkyl (meth) acrylates (b1) are used, the total content of all the alkyl (meth)acrylates should fall within the above range.

Besides the alkyl (meth)acrylate (b1), the monomer composition (b2) may contain a reactive functional group-containing monomer which has a reactive functional group in the molecule. Examples of the reactive functional group-containing monomer that may be contained in the monomer composition (b2) include those of the reactive functional group-containing monomer listed above for the monomer composition (a2). These reactive functional group-containing monomers may be appropriately selected, depending on the desired adherability or other properties, and may be used singly or in combination of two or more.

In the acryl-based polymer (B) described above, the content of the reactive functional group-containing monomer is 25% by weight or less, preferably from 0.5 to 20% by weight, more preferably from 0.5 to 15% by weight, even more preferably from 1 to 8% by weight, based on 100% by weight of the total of the monomer composition (b2) used to form the acryl-based polymer (B). When the monomer composition (b2) contains the reactive functional group-containing monomer in an amount in the above range, the resulting pressure-sensitive adhesive layer can have a high level of heat resistance, solvent resistance, or other properties.

Besides the alkyl (meth)acrylate (b1) and the reactive functional group-containing monomer, the monomer composition (b2) may also contain an additional copolymerizable monomer for improving the adherability to adherends or other purposes. Examples of the copolymerizable monomer that may be contained in the monomer composition (b2) include those of the copolymerizable monomer listed above for the monomer composition (a2). These copolymerizable monomers may be appropriately selected, depending on the desired adherability or other properties, and may be used singly or in combination of two or more. These copolymerizable monomers may be used singly or in combination of two or more. The content of the copolymerizable monomer is preferably 25% by weight or less, more preferably 20% by weight or less, based on 100% by weight of the total of the monomer composition (b2) used to form the acryl-based polymer (B). If the content exceeds 25% by weight, the adherability may decrease.

As mentioned above, the (meth) acryl-based polymer (B) can be obtained by emulsion polymerization of the monomer composition (b2). In the emulsion polymerization, the monomer composition (b2) may be appropriately mixed in water with a polymerization initiator, an emulsifier, and an optional agent such as a chain transfer agent, and then subjected to polymerization. The acryl-based polymer (B) may be a random copolymer, a block copolymer, a graft copolymer, or any other form.

The emulsion polymerization may be performed using the technique described above for the (meth)acryl-based polymer (A) .

The emulsifier to be used may be any of emulsifiers commonly used for emulsion polymerization. Examples of the emulsifier include those listed above for the copolymerizable monomer in the monomer composition (a2), which may be used singly or in combination of two or more. The content of the emulsifier is typically from 0.2 to 10 parts by weight, preferably from 0.5 to 5 parts by weight, based on 100 parts by weight of the total of the monomer composition (a2). If the emulsifier content exceeds 10 parts by weight, the pressure-sensitive adhesive may have lowered cohesive strength, so that the pressure-sensitive adhesive layer may remain in an increased amount on an adherend or the emulsifier may cause staining. If the emulsifier content is less than 0.2 parts by weight, stable emulsification may fail to be maintained.

For the same reason as mentioned above for the (meth)acryl-based polymer (A), the emulsifier to be used is preferably a reactive emulsifier. Examples of such a reactive emulsifier include those of the reactive emulsifier listed above for the (meth)acryl-based polymer (A), one or more of which may be selected and used.

The polymerization initiator may be any of polymerization initiators commonly used. Examples of the polymerization initiator include those of the polymerization initiator listed above for the (meth)acryl-based polymer (A). These polymerization initiators may be used singly or in combination of two or more. The content of the polymerization initiator, which may be selected as needed, is typically from 0.005 to 1 part by weight, preferably from 0.01 to 0.8 parts by weight, based on 100 parts by weight of the total of the monomer composition (b2) used to form the (meth)acryl-based polymer (B).

The chain transfer agent may be used as needed to control the weight average molecular weight of the (meth)acryl-based polymer (B). The chain transfer agent may be any of various chain transfer agents listed above for the (meth)acryl-based polymer (A). The content of the chain transfer agent is typically from 0.001 to 0.5 parts by weight based on 100 parts by weight of the total of the monomer composition (b2) used to form the (meth)acryl-based polymer (B).

Ammonia water or the like may be used to adjust the pH of the emulsion to typically 7 to 9, preferably 7 to 8, so that the stability of the (meth)acryl-based polymer (B) in the emulsion can be improved.

The sol (ethyl acetate-soluble component) of the acryl-based polymer (B) has a weight average molecular weight (Mw) of 200,000 to 4,800,000, more preferably 2,000,000 to 4,500,000. If the weight average molecular weight (Mw) of the sol of the acryl-based polymer (B) is less than 2,000, sol-induced staining may occur as a problem, and if it exceeds 5,000,000, wettability may decrease, so that sufficient adhesive power may fail to be obtained.

In the embodiment, at least one of the weight average molecular weight determined by gel permeation chromatography (GPC) using tetrahydrofuran (THF) as a solvent and the weight average molecular weight determined by GPC using dimethylformamide (DMF) as a solvent preferably falls within the above range.

The (meth) acryl-based polymer (B) may have a gel fraction (ethyl acetate-insoluble component content) of 1% by weight or more, preferably 40% by weight or more, more preferably 60% by weight or more. If the gel fraction is less than 1% by weight, the adherability may be too high. The upper limit of the gel fraction is typically, but not limited to, 99% by weight.

The aqueous dispersion-type pressure-sensitive adhesive contains the acryl-based polymers (A) and (B) in a solid weight ratio of 95/5 to 40/60 (acryl-based polymer (A)/acryl-based polymer (B)). The ratio is more preferably from 98/2 to 70/30, even more preferably from 95/5 to 75/25. When the ratio falls within the above range, the resulting pressure-sensitive adhesive layer can have a sufficient level of adherability to adherends and also have a high level of removability at practical peeling rates.

The acryl-based polymers (A) and (B) each preferably have a solubility parameter (SP value) of 18 to 24 $(MPa)^{1/2}$, more preferably 19 to 23.5 $(MPa)^{1/2}$. In addition, the difference between the SP values of the acryl-based polymers (A) and (B) is preferably 6 or less, more preferably 4.5 or less. When the acryl-based polymers (A) and (B) each have an SP value in the above range, the acryl-based polymers (A) and (B) can have high affinity for each other, so that the resulting pressure-sensitive adhesive layer can have a sufficient level of adherability to adherends and also have a high level of removability at practical peeling rates.

As used herein, the term "solubility parameter (SP value)" means the value δ calculated from the formula below devised by Fedors, which is usually used as a measure of the polarity of compounds.

[Formula 1]

$$\delta = \left[ \frac{\sum_i \Delta e_i}{\sum_i \Delta v_i} \right]^{1/2}$$

In the formula, $\Delta e_i$ represents the evaporation energy of an atom or an atomic group, and $\Delta v_i$ represents the molar volume of the atom or the atomic group. These values are available from, for example, Journal of the Adhesion Society of Japan, Vol. 22, No. 10 (1986), p. 566.

When the acryl-based polymers (A) and (B) are mixed, emulsions of these polymers may be mixed together. In this case, to mix them uniformly, a basic compound or material such as ammonia water may be added to these polymer emulsions before or after the mixing so that an acryl-based polymer salt can be formed.

The aqueous dispersion-type pressure-sensitive adhesive according to the embodiment may also contain a crosslinking agent. The crosslinking agent may be any compound capable of crosslinking the (meth)acryl-based polymer (A) and/or the (meth) acryl-based polymer (B). When the crosslinking agent is used to crosslink the (meth) acryl-based polymers (A) and (B), a highly heat-resistant pressure-sensitive adhesive layer can be obtained. Examples of the crosslinking agent include an isocyanate crosslinking agent, an epoxy crosslinking agent, an oxazoline crosslinking agent, an aziridine crosslinking agent, a metal chelate crosslinking agent, and a carbodiimide crosslinking agent.

When the crosslinking agent used is the epoxy crosslinking agent, a carboxyl group, a hydroxyl group such as a phenolic hydroxyl group, an amino group, or an acid anhydride group may be typically used as the reactive functional group and introduced into the acryl-based polymer so that a crosslinked structure can be formed.

Examples of the epoxy crosslinking agent include, but are not limited to, compounds having two or more epoxy groups per molecule, such as bisphenol A-epichlorohydrin epoxy resin, ethylene diglycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidyl aniline, diamineglycidylamine, N,N,N',N'-tetraglycidyl-m-xylylenediamine, and 1,3-bis(N,N'-diamineglycidylaminomethyl)cyclohexane.

In particular, N,N,N',N'-tetraglycidyl-m-xylylenediamine and 1,3-bis(N,N'-diglycidylaminomethyl)cyclohexane are preferably used because they have good reactivity and can form a well-balanced crosslinked structure.

When the crosslinking agent used is the isocyanate crosslinking agent, a hydroxyl group, an amino group, or a carboxyl group may be typically used as the reactive functional group and introduced into the acryl-based polymer so that a crosslinked structure can be formed.

Examples of the isocyanate group-containing compound include, but are not limited to, diphenylmethane diisocyanate (MDI), tolylene diisocyanate (TDI), hexamethylene diisocyanate (HDI), isophorone diisocyanate (IPDI), trimethylhexamethylene diisocyanate (TMDI), xylene diisocyanate (XDI), naphthalene diisocyanate (NDI), trimethylolpropane (TMP) adducts of TDI, and TMP adducts of IPDI.

When the crosslinking agent used is the isocyanate crosslinking agent, a catalyst may also be used to promote the crosslinking reaction. Such a catalyst is usually an amine catalyst or an organometallic catalyst. Examples include amine catalysts such as N,N-dimethylcyclohexylamine, triethylamine, pyridine, N-methylmorpholine, N,N,N',N'-tetramethylethylenediamine, bis-2-dimethylaminoether, triethylenediamine, and triethanolamine; and organometallic catalysts such as tin(II) octanoate, tin(II) oleate, dibutyltin diacetate, dibutyltin dilaurate, dimethyltin mercaptide, dimethyltin dimaleate, and lead octanoate. These catalysts may be used singly or in combination of two or more. The catalyst is usually used in an amount of 0.001 to 5.0 parts by weight based on 100 parts by weight of the crosslinking agent.

When the crosslinking agent used is the oxazoline crosslinking agent, a carboxyl group, a hydroxyl group, an aromatic mercapto group, or an acid anhydride may be typically used as the reactive functional group and introduced into the acryl-based polymer so that a crosslinked structure can be formed.

The oxazoline crosslinking agent may be the crosslinking agent disclosed in JP-A-2009-001673. More specifically, the oxazoline crosslinking agent may have a main chain of an acrylic or styrene skeleton and an oxazoline group-containing side chain on the main chain. Particularly preferred is an oxazoline group-containing acryl-based polymer including a main chain of an acrylic skeleton and an oxazoline group-containing side chain on the main chain. In particular, a polymer produced using 2-isopropenyl-2-oxazoline as an addition-polymerizable oxazoline is preferred. Examples of such an oxazoline crosslinking agent include EPOCROS WS-500 (trade name) manufactured by NIPPON SHOKUBAI CO., LTD.

When the crosslinking agent used is the aziridine crosslinking agent, a carboxyl group, a glycidyl group, or an isocyanate group may be typically used as the reactive functional group and introduced into the acryl-based polymer so that a crosslinked structure can be formed.

Examples of the aziridine crosslinking agent include, but are not limited to, trimethylolpropane tris[3-(1-aziridinyl)propionate] and trimethylolpropane tris[3-(1-(2-methyl)aziridinyl propionate)].

When the crosslinking agent used is the metal chelate crosslinking agent, a carboxyl group, a hydroxyl group, a glycidyl group, or an isocyanate group may be typically used as the reactive functional group and introduced into the acryl-based polymer so that a crosslinked structure can be formed.

Examples of the metal chelate crosslinking agent include, but are not limited to, the crosslinking agents disclosed in JP-A-2007-063536. Specific examples include aluminum chelate compounds, titanium chelate compounds, zinc chelate compounds, zirconium chelate compounds, iron chelate compounds, cobalt chelate compounds, nickel chelate compounds, tin chelate compounds, manganese chelate compounds, and chromium chelate compounds.

When the crosslinking agent used is the carbodiimide crosslinking agent, a carboxyl group, an amino group, or a hydroxyl group may be typically used as the reactive functional group and introduced into the acryl-based polymer so that a crosslinked structure can be formed.

The carbodiimide crosslinking agent may be of any type having at least two carbodiimide groups per molecule. Examples of the carbodiimide group include compounds represented by the formula $R^3$-N=C=N-$R^4$-N=C=N-$R^5$ wherein $R^3$, $R^4$, and $R^5$ each represent a hydrocarbon group.

A carbodiimide group-containing polymer (polycarbodiimide) is advantageously used as the carbodiimide crosslinking agent. In particular, a polymer having a carbodiimide group and a moiety with high affinity for water, such as an ethylene oxide moiety (-$CH_2$-$CH_2$-O-) is advantageously used. Commercially available examples of the carbodiimide group-containing polymer (polycarbodiimide) that may be used as the carbodiimide crosslinking agent include CARBODILITE V-02, CARBODILITE V-02-L2, CARBODILITE V-04, CARBODILITE E-01, and CARBODILITE E-02 (trade names) manufactured by Nisshinbo Chemical Inc.

These crosslinking agents may be used singly or in combination of two or more.

The amount of the crosslinking agent to be used may be appropriately changed depending on its type. In general, the crosslinking agent may be used in an amount of 0.0007 to 10 parts by weight, preferably 0.001 to 5 parts by weight, based on 100 parts by weight of the total of the acryl-based polymers (A) and (B). If the content of the crosslinking agent is less than 0.0007 parts by weight, the crosslinking agent may fail to produce its effect. If the content of the crosslinking agent is more than 10 parts by weight, wettability to an adherend may be insufficient, which may cause blistering between the adherend and the pressure-sensitive adhesive layer.

The aqueous dispersion-type pressure-sensitive adhesive according to the embodiment may further contain a tackifier. For example, such a tackifier may be one or more selected from rosin-based resin, rosin derivative resin, petroleum resin, terpene resin, phenolic resin, ketone resin, and other various tackifying resins.

To increase cohesiveness in a high-temperature environment, for example, the tackifier preferably has a softening point of 100°C or more, more preferably 140°C or more. Examples of the tackifier with such a softening point include, but are not limited to, SUPER ESTER E-865 (softening point 160°C), SUPER ESTER E-865NT (softening point 160°C), SUPER ESTER E-650NT (softening point 160°C), TAMANOL E-100 (softening point 150°C), TAMANOL E-200 (softening point 150°C), TAMANOL 803L (softening point 145-160°C), PENSEL D-160 (softening point 150°C), and PENSEL KK (softening point 165°C) manufactured by ARAKAWA CHEMICAL INDUSTRIES, LTD. ; and YS Polystar S series, YS Polystar T series, and Mighty Ace G series manufactured by YASUHARA CHEMICAL Co., Ltd. These tackifiers may be used singly or in combination of two or more. When a tackifier with a softening point of about 100°C or more is used, for example, a higher level of cohesiveness and other properties (such as peel strength and edge peel resistance) can be obtained.

When used, the tackifier is typically added to an aqueous emulsion of the acryl-based polymer (A) and/or the acryl-based polymer (B). The tackifier may be added in any form. In general, the tackifier is added in the form of an aqueous dispersion (tackifier emulsion), which contains the tackifier dispersed in water.

On a non-volatile (solid) basis, the content of the tackifier may be, for example, 50 parts by weight or less, based on 100 parts by weight of the total of the acryl-based polymers (A) and (B). In general, it is appropriate to set the content at 40 parts by weight or less. The lower limit of the tackifier content is not limited. In general, good results can be obtained when the tackifier content is 1 part by weight or more based on 100 parts by weight of the total of the acryl-based polymers (A) and (B) .

In a preferred mode, the content (blend ratio) of the tackifier is from 5 to 40 parts by weight (typically from 5 to 30 parts by weight, specifically 15 to 30 parts by weight), based on 100 parts by weight of the total of the acryl-based polymers (A) and (B) on a solid basis.

If desired, the aqueous dispersion-type pressure-sensitive adhesive according to the embodiment may further contain an additive commonly added to pressure-sensitive adhesives, such as a viscosity modifier, a release modifier, a plasticizer, a softening agent, a filler, a colorant (such as a pigment or a dye), an age resistor, a surfactant, a leveling agent, or an antifoamer. The content of these additives is not limited and may be selected as desired.

The aqueous dispersion-type pressure-sensitive adhesive according to the embodiment may contain, as an optional component, a polymer other than the acryl-based polymer. Such a polymer preferably has rubber-like or elastomeric properties. Examples of such a polymer include ethylene-vinyl acetate copolymers, acrylic rubber, natural rubber (NR), isoprene rubber (IR), styrene-butadiene rubber (SBR), chloroprene rubber (CR), butyl rubber (BR), ethylene-propylene rubber (EPM or EPDM), polyisobutylene, styrene-ethylene-butylene-styrene copolymers (SEBS), acrylonitrile-butadiene copolymers (NBR), styrene-butadiene-styrene block copolymers (SBS), styrene-isoprene-styrene block copolymers (SIS), and polyvinyl alkyl ether (e.g., polyvinyl isobutyl ether) . These may be used singly or in combination of two or more. When used, for example, such a polymer may be added in the form of an emulsion, which contains the polymer dispersed in water, to an aqueous emulsion of the acryl-based polymer.

In a suitable mode, the content (blend ratio) of the polymer other than the acryl-based polymer is generally 50 parts by weight or less (for example, from 5 to 50 parts by weight), based on 100 parts by weight of the total of the acryl-based polymers (A) and (B) on a non-volatile (solid) basis. This polymer content may also be 5 parts by weight or less, or the pressure-sensitive adhesive may be substantially free of this polymer.

The surface protection film of the embodiment includes a backing film and a pressure-sensitive adhesive layer made from the aqueous dispersion-type pressure-sensitive adhesive.

In a typical mode, the pressure-sensitive adhesive layer is continuously formed on the backing film. However, such a form is non-limiting, and for example, the pressure-sensitive adhesive layer may be formed in a regular pattern such as dots or stripes or in a random pattern. The surface protection film provided according to the invention may be in the form of a roll or sheets. Alternatively, the surface protection film may be formed into various shapes.

In the surface protection film of the embodiment, for example, the surface of the backing film opposite to its surface on which the pressure-sensitive adhesive layer is formed may be used as a release surface. The surface protection film may be wound into a roll in such a way that the release surface is in contact with the pressure-sensitive adhesive layer formed on the backing film.

The backing film may be made of, for example, a film of polyolefin such as polyethylene, polypropylene, poly-1-butene, poly-4-methyl-1-pentene, an ethylene-propylene copolymer, an ethylene-1-butene copolymer, an ethylene-vinyl acetate copolymer, an ethylene-ethyl acrylate copolymer, or an ethylene-vinyl alcohol copolymer, a film of polyester such as polyethylene terephthalate, polyethylene naphthalate, or polybutylene terephthalate, a polyacrylate film, a polystyrene film, a film of polyamide such as nylon 6, nylon 6, 6, or partially aromatic polyamide, a polyvinyl chloride film, a polyvinylidene chloride film, or a polycarbonate film. The backing film may also be a multilayer backing film, which is a laminate of backing films.

The backing film may be a non-stretched film or a stretched (uniaxially or biaxially stretched) film. The surface of the backing film on which the pressure-sensitive adhesive layer is to be formed may also be subjected to primer coating or a surface treatment such as a corona discharge treatment.

The thickness of the backing film is generally from about 5 to about 200 $\mu$m, preferably from about 10 to about 100 $\mu$m.

The pressure-sensitive adhesive layer can be formed by a process including applying the aqueous dispersion-type pressure-sensitive adhesive to the backing film and then drying the pressure-sensitive adhesive. Alternatively, the aqueous dispersion-type pressure-sensitive adhesive may be applied to a release sheet and then dried to form a pressure-sensitive adhesive layer, which may be transferred onto the backing film. The drying temperature may be, for example, in the range of 40 to 120°C although it depends on the type of the backing film.

Examples of methods for applying the aqueous dispersion-type pressure-sensitive adhesive to the backing film or the like include, but are not limited to, methods using a gravure roll coater, a reverse roll coater, a kiss roll coater, a dip roll coater, a bar coater, a knife coater, a spray coater, a fountain die coater, or a closed edge die coater.

The thickness of the pressure-sensitive adhesive layer is typically, but not limited to, 2 to 500 $\mu$m, preferably 3 to 200 $\mu$m.

The surface protection film according to the embodiment has a sufficient level of adherability to adherends and also has a high level of removability at practical peeling rates.

EXAMPLES

Hereinafter, the invention will be more specifically described with reference to examples, which, however, are not intended to limit the invention.

(Preparation of (meth)acryl-based polymer (A))

(Synthesis Example 1: Aqueous dispersion-type acryl-based polymer (A1))

To a vessel were added 90 parts by weight of water, and 92 parts by weight of 2-ethylhexyl acrylate (2EHA), 4 parts of methyl methacrylate (MMA), 4 parts by weight of acrylic acid (AA), and 3 parts by weight of a reactive emulsifier (AQUALON HS-1025 (trade name) manufactured by Dai-ichi Kogyo Seiyaku Co., Ltd.) as shown in the table and then mixed by stirring with a homo mixer to form a monomer emulsion.

A reaction vessel equipped with a condenser tube, a nitrogen-introducing tube, a thermometer, and a stirrer was then charged with 50 parts by weight of water, 0.01 parts by weight of ammonium persulfate as a polymerization initiator, and 10% by weight part of the monomer emulsion. The mixture was subjected to emulsion polymerization at 65°C for 1 hour with stirring. Subsequently, after 0.05 parts by weight of a polymerization initiator (ammonium persulfate) was further added, all the remaining part (90% by weight part) of the monomer emulsion was added over 3 hours with stirring. The mixture was then subjected to reaction at 75°C for 3 hours. Subsequently, after the reaction mixture was cooled to 30°C, 10% by weight ammonia water was added to adjust its pH to 8, so that an aqueous dispersion-type acryl-based polymer (A1) solution (42% by weight in acrylic emulsion polymer concentration) was obtained.

(Synthesis Example 2: Aqueous dispersion-type acryl-based polymer (A2))

A reaction vessel equipped with a stirring blade, a thermometer, a nitrogen gas-introducing tube, a condenser, and a dropping funnel was charged with 59 parts by weight of n-butyl acrylate (BA), 40 parts by weight of n-butyl methacrylate (BMA), 1 part by weight of acrylic acid (AA), 2 parts by weight of a reactive emulsifier (AQUALON BC-2020 (trade name) manufactured by Dai-ichi Kogyo Seiyaku Co., Ltd.), and 0.6 parts by weight of a polyoxyethylene alkyl phosphate ester emulsifier (PHOSPHANOL RE-410 (trade name) manufactured by TOHO Chemical Industry Co., Ltd.). The mixture was emulsified in 150 parts by weight of water, and the air in the vessel was replaced with nitrogen for 2 hours. Subsequently, after the mixture was heated to 55°C, 0.03 parts by weight of 2,2'-azobis(2-methylpropionamidine) dihydrochloride was added as a polymerization initiator to the mixture. Nitrogen gas was introduced into the vessel while the mixture was gently stirred, and the mixture was subjected to polymerization reaction for 8 hours while the temperature of the liquid in the flask was kept at 55°C. Subsequently, the reaction mixture was cooled to room temperature and then neutralized with 10% by weight ammonia water to give an aqueous dispersion-type acryl-based polymer (A2) solution (48% by weight in acrylic emulsion polymer concentration) was obtained.

(Preparation of (meth)acryl-based polymer (B))

(Synthesis Example 3: Aqueous dispersion-type acryl-based polymer (BI)

A reaction vessel equipped with a stirring blade, a thermometer, a nitrogen gas-introducing tube, a condenser, and a dropping funnel was charged with 96 parts by weight of methyl methacrylate (MMA), 4 parts by weight of acrylic acid (AA), and 2 parts by weight of an anionic reactive emulsifier (AQUALON KH-10 (trade name) manufactured by Dai-ichi Kogyo Seiyaku Co., Ltd.). The mixture was emulsified in 220 parts by weight of water, and the air in the vessel was replaced with nitrogen for 1 hour. Subsequently, after the mixture was heated to 60°C, 0.1 parts by weight of 2,2'-azobis[N-(2-carboxyethyl)-2-methylpropionamidine] hydrate (VA-057 (trade name) manufactured by Wako Pure Chemical Industries, Ltd.) was added as a polymerization initiator to the mixture. Nitrogen gas was introduced into the vessel while the mixture was gently stirred, and the mixture was subjected to polymerization reaction for 3 hours while the temperature of the liquid in the flask was kept at 55°C. Subsequently, the reaction mixture was cooled to room temperature, and then 10% by weight ammonia water was added to adjust its pH to 8, so that an aqueous dispersion-type acryl-based polymer (B1) solution (38% by weight in acrylic emulsion polymer concentration) was obtained.

(Synthesis Example 4: Aqueous dispersion-type acryl-based polymer (B2)) (Comparative)

An aqueous dispersion-type acryl-based polymer (B2) solution (38% by weight in acrylic emulsion polymer concentration) was obtained using the same process as in Synthesis Example 2, except that the monomer composition was composed of 96 parts by weight of methyl methacrylate (MMA), 4 parts by weight of acrylic acid (AA), and 20 parts by weight of tert-dodecanethiol and the polymerization temperature and the polymerization time were changed to 60°C and 3 hours, respectively.

(Synthesis Example 5: Aqueous dispersion-type acryl-based polymer (B3))

An aqueous dispersion-type acryl-based polymer (B3) solution (37% by weight in acrylic emulsion polymer concentration) was obtained using the same process as in Synthesis Example 3, except that tert-butyl acrylate (t-BA) was used instead of methyl methacrylate (MMA).

(Synthesis Example 6: Aqueous dispersion-type acryl-based polymer (B4))

An aqueous dispersion-type acryl-based polymer (B4) solution (37% by weight in acrylic emulsion polymer concentration) was obtained using the same process as in Synthesis Example 3, except that 96 parts by weight of isobornyl methacrylate (IBXMA) was used instead of 96 parts by weight of methyl methacrylate (MMA).

[Table 1]

| | | Formulation | | | | | | | | Measurement results | | | |
|---|---|---|---|---|---|---|---|---|---|---|---|---|---|
| | | 2EHA | BA | BMA | MMA | t-BA | IBXMA | AA | t-DT | Tg (°C) | SP value (MPa)$^{1/2}$ | Gel fraction (%) | Mw (x 10,000) |
| Synthesis Example 1 | A1 | 92 | | | 4 | | | 4 | | -56 | 19.5 | 85 | 9 |
| Synthesis Example 2 | A2 | | 59 | 40 | | | | 1 | | -26 | 20.1 | 70 | 40 |
| Synthesis Example 3 | B1 | | | | 96 | | | 4 | 0.15 | 125 | 20.8 | 67 | 422 |
| Synthesis Example 4 | B2 | | | | 96 | | | 4 | 20 | 123 | 20.8 | 1.5 | 0.3 |
| Synthesis Example 5 | B3 | | | | | 96 | | 4 | | 53 | 19.8 | 82 | 333 |
| Synthesis Example 6 | B4 | | | | | | 96 | 4 | | 169 | 21.0 | 85 | - |

(Example 1)

The emulsions of the aqueous dispersion-type acryl-based polymers A1 and B1 were mixed in such a way that 90 parts by weight of the solid in the emulsion of the aqueous dispersion-type acryl-based polymer A1 was mixed with 10 parts by weight of the solid in the emulsion of the aqueous dispersion-type acryl-based polymer B1. A crosslinking agent (EPOCROS WS-500 (trade name) manufactured by NIPPON SHOKUBAI CO., LTD.) was then added to the mixture in such a way that 4 parts of the solid of the crosslinking agent was added to 100 parts by weight of the total of the solids of the aqueous-dispersion type acryl-based polymers A1 and B1, so that an aqueous dispersion-type pressure-sensitive adhesive was obtained.

Subsequently, the prepared aqueous dispersion-type pressure-sensitive adhesive was applied to a polyethylene backing (POLYTOP NSM-M FILM (trade name) manufactured by OOMORIKASEI Co., Ltd., 55 $\mu$m in thickness) so that a 6-$\mu$m-thick coating could be formed after drying. The coated film was then dried at 70°C for 2 minutes to give a surface protection film.

(Examples 2 to 9 and Comparative Examples 1 to 4)

Aqueous dispersion-type pressure-sensitive adhesives and then surface protection films were prepared using the same process as in Example 1, except that the type and amount of the acryl-based polymer, the type and amount of the crosslinking agent, and the coating thickness after the drying were changed as shown in the table.

Example 5 is not according to the invention.

The surface protection films were evaluated using the methods described below.

(Weight average molecular weight)

The weight average molecular weight (Mw) of the prepared polymers was measured by gel permeation chromatography (GPC).

Each acryl-based polymer emulsion obtained in each of the examples and the comparative examples was dried at 130°C for 2 hours. The dried product was then immersed in THF at room temperature for 7 days to leach out the THF-soluble component. The resulting THF-insoluble component was then separated by filtration. The filtrate was optionally concentrated or diluted (the product may be temporarily dried, and then the dried product may be dissolved again in THF) to form a THF solution containing the THF-soluble component at a suitable concentration (about 0.1 to about 0.3% by weight).

The prepared THF solution was subjected to GPC analysis under the conditions below, and the weight average molecular weight (Mw) of the polymer was calculated based on the polystyrene calibration curve.

    Analyzer: HLC-8220GPC manufactured by TOSOH CORPORATION
    Columns: TSKgel GMH-H (S) manufactured by TOSOH CORPORATION, two linked columns
    Flow rate: 0.5 ml/minute
    Sample injection volume: 100 $\mu$l
    Column temperature: 40°C
    Detector: differential refractometer

(Gel fraction)

The gel fraction of the pressure-sensitive adhesive according to the embodiment was measured by the method described below.

The total weight (Wamg) of a kite string and a porous tetrafluoroethylene resin film (NITOFLON NTF1122 (trade name) manufactured by NITTO DENKO CORPORATION) with a pore size of 0.2 $\mu$m was measured in advance. About 0.1 g of the pressure-sensitive adhesive was wrapped in the form of a pouch in the porous film and then tied with the kite string. The weight (Wbmg) of the wrapped product was measured. The wrapped product was placed in a screw vial with a volume of 50 ml, and then the screw vial was filled with ethyl acetate. After the vial was allowed to stand at room temperature for 7 days, the wrapped product was taken out of it and then dried at 130°C for 2 hours. The weight (Wcmg) of the wrapped product was then measured. The gel fraction was calculated from the following formula. Gel fraction (%) = {(Wc - Wa)/(Wb - Wa)} x 100

The gel fraction of the acryl-based polymer was determined using the same process as described above, except that the acryl-based polymer obtained by drying each acryl-based polymer emulsion at 130°C for 2 hours was used instead of the pressure-sensitive adhesive.

(Glass transition temperature)

The glass transition temperature (Tg) of the prepared pressure-sensitive adhesive was determined as follows. About 2.5 mg of the pressure-sensitive adhesive obtained in each of the examples and the comparative examples was subjected to measurement under the conditions shown below using a differential scanning calorimeter (DSC), in which the glass transition temperature was defined as the midpoint glass transition temperature determined based on "9.3 Method for determining glass transition temperature" according to JIS K7121 (1987).

Analyzer: Q-2000 manufactured by TA Instruments
Average rate of temperature rise: 5°C/minute
Temperature amplitude: $\pm 0.53$°C
Modulation cycle: 40 seconds

(Adherability)

Each polyethylene-backed pressure-sensitive adhesive sheet obtained in each of the examples and the comparative examples was cut into a 20 mm x 100 mm size piece, which was then pressure-bonded (0.26 MPa) to an acrylic resin (PMMA) plate by being passed through a laminator. The resulting laminate was then allowed to stand at 23°C for 30 minutes. The piece was then peeled off at a peel angle of 180° and a peeling rate of 0.3 m/minute in the atmosphere at 23°C when the adhesive strength (X) was measured. If the adhesive strength (X) is 0.05 N/20 mm or more, preferably 1.0 N/20 mm or more, the piece can be determined to have a sufficient level of adherability.

(Removability)

Each polyethylene-backed pressure-sensitive adhesive sheet obtained in each of the examples and the comparative examples was cut into a 20 mm x 100 mm size piece, which was then pressure-bonded (0.26 MPa) to an acrylic resin (PMMA) plate by being passed through a laminator. The resulting laminate was then allowed to stand at 23°C for 30 minutes. The piece was then peeled off at a peel angle of 180° and a peeling rate of 10 m/minute or 30 m/minute in the atmosphere at 23°C when the adhesive strength (Y) was measured at each peeling rate. In Table 2 below, Y1 represents the adhesive strength (Y) at a peeling rate of 10 m/minute, and Y2 represents the adhesive strength (Y) at a peeling rate of 30 m/minute. If the adhesive strength (Y) is 5.2 N/20 mm or less, preferably 3.0 N/20 mm or less, the piece can be determined to have a high level of removability at practical peeling rates.

(Relationship between adherability and removability)

The value obtained by subtracting the adhesive strength (X) from the adhesive strength (Y) was used as a measure of the relationship between the adherability and the removability for the evaluation. As the value (Y-X) obtained by subtracting the adhesive strength (X) from the adhesive strength (Y) decreases, both the adherability and the removability at practical peeling rates become more compatible with each other and provide more successful results. The value Y-X should be 3.5 or less, preferably 2.0 or less.
Table 2 shows the results of the evaluation of each of the examples and the comparative examples. The pressure-sensitive adhesive of Comparative Example 4 had poor adherability and failed to adhere to the acrylic resin plate. This made impossible the measurement of the adhesive strengths (X) and (Y).

[Table 2]

| | Formulation | | | | | | | Measurement results | | | | | | | |
|---|---|---|---|---|---|---|---|---|---|---|---|---|---|---|---|
| | Acryl-based polymer (A) | | Acryl-based polymer (B) | | Crosslinking agent | Pressure-sensitive adhesive layer (µm) | Gel fraction (%) | Tg (°C) | | Adhesive strength (N/20 mm) to PMMA | | | | | |
| | Synthesis Example | Blending amount | Synthesis Example | Blending amount | | | | -20°C or less | +30-+190°C | 0.3 m/min peel (X) | 10 m/min peel (Y1) | Y1-X | 30 m/min peel (Y2) | Y2-X |
| Example 1 | A1 | 90 | B1 | 10 | 4 | 6 | 88 | -58 | 125 | 2.8 | 4.8 | 2.0 | 4.1 | 1.3 |
| Example 2 | A1 | 80 | B1 | 20 | 4 | 6 | 89 | -57 | 124 | 1.8 | 3.5 | 1.7 | 2.9 | 1.1 |
| Example 3 | A1 | 70 | B1 | 30 | 4 | 6 | 90 | -57 | 123 | 0.9 | 0.8 | -0.1 | 1.3 | 0.4 |
| Example 4 | A1 | 60 | B1 | 40 | 2 | 3 | 87 | -55 | 126 | 0.2 | 0.4 | 0.2 | 0.6 | 0.4 |
| Example 5 | A1 | 80 | B2 | 20 | 4 | 3 | 89 | -58 | 125 | 1.0 | 3.1 | 2.1 | 2.9 | 1.9 |
| Example 6 | A1 | 60 | B3 | 40 | 0 | 3 | 82 | -54 | 53 | 0.3 | 0.3 | 0.0 | 0.9 | 0.6 |
| Example 7 | A1 | 50 | B3 | 50 | 0 | 3 | 81 | -55 | 51 | 0.07 | 0.2 | 0.1 | 0.3 | 0.23 |
| Example 8 | A1 | 80 | B4 | 20 | 4 | 3 | 89 | -56 | 169 | 0.4 | 1.0 | 0.6 | 1.1 | 0.7 |
| Example 9 | A2 | 90 | B1 | 10 | 4 | 3 | 88 | -27 | 125 | 1.7 | 3.0 | 1.3 | 2.9 | 1.2 |
| Comparative Example 1 | A1 | 100 | - | - | 0 | 3 | 85 | -56 | - | 3.0 | 6.2 | 3.2 | 7.0 | 4 |
| Comparative Example 2 | A1 | 100 | - | - | 4 | 6 | 88 | -56 | - | 1.4 | 7.1 | 5.7 | 6.3 | 4.9 |
| Comparative Example 3 | A2 | 100 | - | - | 4 | 3 | 85 | -26 | - | 2.7 | 5.5 | 2.8 | 5.5 | 2.8 |
| Comparative Example 4 | A1 | 30 | B3 | 70 | 2 | 3 | 88 | -55 | 51 | - | - | - | - | - |

EP 2 810 998 B1

16

The results in Table 2 show that in all the examples, the value obtained by subtracting the adhesive strength (X) from the adhesive strength (Y) is relatively small and therefore the pressure-sensitive adhesive layer has both a sufficient level of adherability to an adherend and a high level of removability at practical peeling rates.

In the comparative examples, however, the value obtained by subtracting the adhesive strength (X) from the adhesive strength (Y) is relatively large and therefore the pressure-sensitive adhesive layer is not considered to have both a sufficient level of adherability to an adherend and a high level of removability at practical peeling rates.

**Claims**

1. A surface protection film, comprising:

   a backing film; and
   a pressure-sensitive adhesive layer provided on one side of the backing film and made from an aqueous dispersion-type pressure-sensitive adhesive, wherein
   the aqueous dispersion-type pressure-sensitive adhesive comprises an acryl-based polymer (A) comprising a monomer unit or units derived from a monomer composition (a2) containing an alkyl (meth)acrylate (a1) as a main component; and another acryl-based polymer (B) having a glass transition temperature higher than that of the acryl-based polymer (A) and comprising a monomer unit or units derived from a monomer composition (b2) containing 75% by weight or more of an alkyl (meth) acrylate (b1) capable of forming a homopolymer with a glass transition temperature of 20 °C or more,
   the aqueous dispersion-type pressure-sensitive adhesive contains the acryl-based polymers (A) and (B) in a weight ratio (A)/(B) of 95/5 to 40/60, and
   the pressure-sensitive adhesive layer has a glass transition temperature peak detected at -20°C or less and a glass transition temperature peak detected at 30°C to 190°C as measured by differential scanning calorimetry (DSC).
   wherein the pressure-sensitive adhesive layer has an ethyl acetate-insoluble component content of 80% by weight or more, determined according to the method in the experimental part;
   wherein the sol of the acryl-based polymer (A) has a weight average molecular weight of 40,000 to 750,000,
   wherein the sol of the acryl-based polymer (B) has a weight average molecular weight of 200,000 to 4,800,000, and
   wherein the weight average molecular weight is determined by Gel Permeation Chromatography (GPC) with tetrahydrofuran (THF) or dimethyl formamide (DMF) solvent.

2. The surface protection film according to claim 1, wherein the acryl-based polymers (A) and (B) each have a Fedors solubility parameter of 18 to 24 $(MPa)^{1/2}$.

3. The surface protection film according to claim 1 or 2, wherein the acryl-based polymer (A) and/or the acryl-based polymer (B) is produced by polymerization in the presence of a reactive emulsifier.

4. The surface protection film according to any one of claims 1 to 3, wherein the aqueous dispersion-type pressure-sensitive adhesive contains a crosslinking agent.

**Patentansprüche**

1. Oberflächenschutzfolie, die Folgendes umfasst:

   eine Trägerfolie; und
   eine druckempfindliche Haftschicht, die auf einer Seite der Trägerfolie bereitgestellt ist und aus einem druckempfindlichen Klebstoff von einer Art der wässerigen Dispersion hergestellt ist, wobei
   der druckempfindliche Klebstoff von der Art der wässerigen Dispersion Folgendes umfasst: ein acrylbasiertes Polymer (A), das eine Monomereinheit oder Einheiten umfasst, die von einer Monomerzusammensetzung (a2) abgeleitet sind, die ein Alkyl(meth)acrylat (a1) als eine Hauptkomponente enthält; und ein weiteres acrylbasiertes Polymer (B) mit einer Glasübergangstemperatur höher als die des acrylbasierten Polymers (A) und umfassend eine Monomereinheit oder Einheiten, die von einer Monomerzusammensetzung (b2) abgeleitet sind, die 75 Gew.-% oder mehr eines Alkyl(meth)acrylats (b1) enthält, das fähig ist, ein Homopolymer mit einer Glasübergangstemperatur von 20 °C oder mehr auszubilden,

der druckempfindliche Klebstoff von der Art der wässerigen Dispersion die acrylbasierten Polymere (A) und (B) in einem Gewichtsverhältnis (A)/(B) von 95/5 bis 40/60 enthält; und

die druckempfindliche Haftschicht eine Glasübergangsspitzentemperatur aufweist, die bei -20 °C oder weniger erfasst ist, und eine Glasübergangsspitzentemperatur, die bei 30 °C bis 190 °C erfasst ist, gemessen durch dynamische Differenzkalorimetrie (*Differential Scanning Calorimetry* - DSC),

wobei die druckempfindliche Haftschicht einen Gehalt an Ethylacetat-unlöslichen Komponenten von 80 Gew.-% oder mehr aufweist, bestimmt gemäß dem Verfahren in dem Versuchsabschnitt;

wobei das Sol des acrylbasierten Polymers (A) eine gewichtsmittlere Molekülmasse von 40.000 bis 750.000 aufweist,

wobei das Sol des acrylbasierten Polymers (B) eine gewichtsmittlere Molekülmasse von 200.000 bis 4.800.000 aufweist, und

wobei die gewichtsmittlere Molekülmasse durch Gelpermeationschromatografie (*Gel Permeation Chromatography* - GPC) mit Tetrahydrofuran(THF)- oder Dimethylformamid(DMF)-Lösungsmittel bestimmt ist.

2. Oberflächenschutzfolie nach Anspruch 1, wobei die acrylbasierten Polymere (A) und (B) jeweils einen Löslichkeitsparameter nach Fedors von 18 bis 24 $(MPa)^{1/2}$ aufweisen.

3. Oberflächenschutzfolie nach Anspruch 1 oder 2, wobei das acrylbasierte Polymer (A) und/oder das acrylbasierte Polymer (B) durch Polymerisation in Gegenwart eines reaktionsfähigen Emulgiermittels erzeugt wird.

4. Oberflächenschutzfolie nach einem der Ansprüche 1 bis 3, wobei der druckempfindliche Klebstoff von der Art der wässerigen Dispersion ein Vernetzungsmittel enthält.

**Revendications**

1. Film de protection de surface, comprenant :

un film de support ; et

une couche adhésive autocollante ménagée sur un côté du film de support et constituée d'un adhésif autocollant de type dispersion aqueuse, dans lequel

l'adhésif autocollant de type dispersion aqueuse comprend un polymère à base d'acryle (A) comprenant un motif ou des motifs de monomère dérivé(s) d'une composition de monomère (a2) contenant un (méth)acrylate d'alkyle (a1) comme composant principal ; et un autre polymère à base d'acryle (B) ayant une température de transition vitreuse supérieure à celle du polymère à base d'acryle (A) et comprenant un motif ou des motifs de monomère dérivé(s) d'une composition de monomère (b2) contenant 75 % en poids ou plus d'un (méth)acrylate d'alkyle (b1) capable de former un homopolymère avec une température de transition vitreuse de 20 °C ou plus,

l'adhésif autocollant de type dispersion aqueuse contient les polymères à base d'acryle (A) et (B) dans un rapport en poids (A)/(B) de 95/5 à 40/60, et

la couche adhésive autocollante a un pic de température de transition vitreuse détecté à -20 °C ou moins et un pic de température de transition vitreuse détecté à 30 °C à 190 °C tel que mesuré par calorimétrie à balayage différentiel (DSC),

dans lequel la couche adhésive autocollante a une teneur en composant insoluble dans l'acétate d'éthyle de 80 % en poids ou plus, déterminée selon la méthode dans la partie expérimentale ;

dans lequel le sol du polymère à base d'acryle (A) a une masse moléculaire moyenne en masse de 40 000 à 750 000,

dans lequel le sol du polymère à base d'acryle (B) a une masse moléculaire moyenne en masse de 200 000 à 4 800 000, et

dans lequel la masse moléculaire moyenne en masse est déterminée par chromatographie par perméation de gel (GPC) avec pour solvant du tétrahydrofurane (THF) ou du diméthyl formamide (DMF).

2. Film de protection de surface selon la revendication 1, dans lequel les polymères à base d'acryle (A) et (B) ont chacun un paramètre de solubilité de Fedors de 18 à 24 $(MPa)^{1/2}$.

3. Film de protection de surface selon la revendication 1 ou 2, dans lequel le polymère à base d'acryle (A) et/ou le polymère à base d'acryle (B) est produit par polymérisation en présence d'un émulsifiant réactif.

4. Film de protection de surface selon l'une quelconque des revendications 1 à 3, dans lequel l'adhésif autocollant de type dispersion aqueuse contient un agent de réticulation.

**REFERENCES CITED IN THE DESCRIPTION**

**Patent documents cited in the description**

- JP 2007326899 B
- JP 2007051271 A
- JP 2009001673 A
- JP 2007063536 A

**Non-patent literature cited in the description**

- Polymer Handbook. John Wiley & Sons, Inc, 1999
- *Journal of the Adhesion Society of Japan,* 1986, vol. 22 (10), 566